# EUROPÄISCHE PATENTSCHRIFT

(11) **EP 0 600 478 B1**
(45) Veröffentlichungstag und Bekanntmachung des Hinweises auf die Patenterteilung: **06.03.1996**
(21) Anmeldenummer: 93119426.0
(22) Anmeldetag: 02.12.1993
(51) Int. Cl.: C08F 291/00, C08F 291/18, C08F 255/02, C09D 151/00

(54) **Verfahren zur Herstellung eines Pfropfcopolymerlatex von Kern-Schale-Dispersionsteilchen mit verbesserter Phasenanbindung zwischen Kern und Schale**
Process for the preparation of a graft polymer latex from core-shell particles with improved adhesion between the core and the shell
Préparation d'un latex de copolymère greffé constitué de particules coeur-enveloppe avec adhésion améliorée entre le coeur et l'enveloppe

(30) Priorität: 03.12.1992 DE 4240744
(43) Veröffentlichungstag der Anmeldung: 08.06.1994
(73) Patentinhaber: Wacker-Chemie GmbH, D-81737 München (DE)
(72) Erfinder: Kohlhammer, Klaus, Dr., D-84533 Marktl (DE)

(56) Entgegenhaltungen:
- DE-A- 4 000 543
- FR-A- 2 027 991
- FR-A- 2 376 873
- DATABASE WPI Section Ch, Week 8639, Derwent Publications Ltd., London, GB; Class A14, AN 86-256009 & JP-A-61 185 518 (NIPPON ZEON) 10. August 1986 *

## Beschreibung

Die Erfindung betrifft die Herstellung eines Pfropfcopolymerlatex von Kern-Schale-Dispersionsteilchen mit verbesserter Phasenanbindung zwischen Kern und Schale in einem zweistufigen Emulsionspolymerisationsverfahren, nach dem Verfahren hergestellte Dispersionen und Pfropfcopolymerisate sowie deren Verwendung.

Die Herstellung teilchenförmiger Pfropfpolymerisate mit Hilfe der zweistufigen Emulsionspolymerisation ist bekannt. Bei diesem Verfahren wird in einer ersten Stufe mit Hilfe der Emulsionspolymerisation eine Polymerdispersion erzeugt, auf welche dann in der zweiten Stufe durch Zudosieren der üblichen Initiatoren sowie weiterer Monomere eine Hülle eines anderen Polymeren aufgepfropft wird. Dieses Verfahren wird unter anderem auch dazu verwendet, um kautschukelastische Polymerdispersionsteilchen, die insbesondere durch eine Glasübergangstemperatur von weniger als 0°C charakterisiert sind, mit harten Monomeren zu pfropfen. Eine solche Verfahrensweise wird in der DE-A 3743142 zur Pfropfpolymerisation von Vinylchlorid auf einen Ethylen-Vinylacetat-Kautschuk beschrieben. Bei der Herstellung all dieser, in zweistufigen Verfahren aufgebauten, teilchenförmigen Pfropfpolymerisate besteht das Hauptproblem in der Anbindung der Pfropfhülle an die Pfropfgrundlage. Bei einer unzureichenden Phasenanbindung sind nämlich in der Regel die mechanischen Eigenschaften der entsprechenden Formteile nicht befriedigend. Aus dem Stand der Technik sind bereits eine Reihe von Maßnahmen zur Verbesserung der Phasenanbindung bekannt.

In der EP-A 231933 wird die Verwendung von sogenannten "graft-linking" (pfropfverbindenden) Monomeren beschrieben. Definitionsgemäß handelt es sich hierbei um multifunktionelle Monomere mit mehreren C=C-Doppelbindungen unterschiedlicher Reaktivität, von denen bei der radikalischen Polymerisation der ersten Stufe nicht alle abreagieren und somit in der zweiten Stufe für die Anbindung der zu pfropfenden Monomere zur Verfügung stehen. Nachteilig ist hierbei, daß diese multifunktionellen Monomere bereits in der ersten Polymerisationstufe zum Teil auch als Vernetzer wirken. Außerdem ist häufig zu beobachten, daß die weniger reaktiven Doppelbindungen in der ersten Reaktionsstufe retardierend wirken. Infolgedessen können diese "graft-linking"-Monomeren nicht in beliebigen Mengen in die Pfropfgrundlage eingebracht werden.

Die Verwendung von Hydroxyalkylacrylaten als Comonomere in der Pfropfgrundlage zur Verbesserung der Pfropfrate wird in der DE-A 4006643 beansprucht. Nachteilig bei diesem Verfahren ist, daß die dort vorgeschlagenen Hydroxyalkylacrylate aufgrund ihrer Copolymerisationsparameter nicht mit allen Vinylmonomeren in der ersten Stufe copolymerisiert werden können.

Die Verwendung von copolymerisierbaren Peroxid-Initiatoren, die in der ersten Stufe zusammen mit den Monomeren der Pfropfbasis zu einem sogenannten Makroinitiator copolymerisiert werden, der in der zweiten Stufe ohne weitere Initiatorzugabe eine Pfropfpolymerisation auslösen kann, ist bereits vielfach in der Patentliteratur beschrieben, beispielsweise in der DE-A 4135984 und der darin zitierten Literatur. Nachteilig bei all diesen Verfahren ist der Aufwand bei der Copolymerisation in der ersten Stufe zum Makroinitiator, bei der sorgfältig darauf geachtet werden muß, daß die Peroxidfunktionen nicht zerstört werden.

Bei dem Verfahren der DE-A 4000543 wird die "in-situ"-Generierung eines teilchenförmigen Makroinitiators mit Hydroperoxidgruppen an der Teilchenoberfläche beansprucht. Dazu wird eine in Emulsion erzeugte Pfropfgrundlage mit wasserlöslichen Peroxiden und Luftsauerstoff behandelt. Dieser Publikation zufolge bilden sich dabei Hydroperoxidgruppen auf der Teilchenoberfläche, die beim Pfropfschritt in der zweiten Stufe mit Hilfe eines Reduktionsmittels aktiviert werden können und letztendlich als Ankergruppen für die aufgepfropfte Polymerhülle fungieren. Nachteilig bei diesem Verfahren ist die Verwendung von molekularem Sauerstoff, der bekannterweise aufgrund seines Diradikalcharakters bei radikalischen Reaktionen retardierend wirkt und deshalb vor der nachfolgenden Pfropfpolymerisation aufwendig entfernt werden muß.

In FR-A 2376873 wird ein Verfahren beschrieben bei dem ferromagnetische Feststoffteilchen in einer wäßrigen Polymerlösung dispergiert werden und nach Vernetzung des Polymeren und Ausfällen, von Polymer umhüllte Feststoffteilchen gewonnen werden (Seite 3, Zeile 14 - 37). Die Agglomerate werden in Wasser verrührt, mit Wasserstoffperoxid behandelt, überschüssiges Wasserstoffperoxid ausgewaschen und durch Zugabe von Eisen(II)-Salz als Reduktionsmittel und Monomerzugabe eine auf die Agglomerate aufgepfropfte Polymerhülle gebildet. Auf Seite 1, Zeile 36 bis Seite 2, Zeile 7 und auf Seite 6, Zeile 1 bis 7 werden andere Initiatorsysteme als Wasserstoffperoxid/Fe(II)-Salz als ungeeignet beschrieben.

Der Erfindung lag daher die Aufgabe zugrunde, ein Verfahren für die Herstellung von teilchenförmigen Pfropfcopolymerisaten mit verbesserter Anbindung zwischen Pfropfbasis und Pfropfhülle zu entwickeln, mit dem die Nachteile der obengenannten Verfahrensweisen vermieden werden können.

Gegenstand der Erfindung ist ein Verfahren zur Herstellung eines Pfropfcopolymer-Latex von Kern-Schale-Dispersionsteilchen mit verbesserter Phasenanbindung zwischen Kern und Schale in einem zweistufigen Emulsionspolymerisationsverfahren, wobei in der ersten Stufe ein Latex auf der Basis eines oder mehrerer Monomere aus der Gruppe der (Meth)acrylsäureester von Alkoholen mit 1 bis 14 C-Atomen, Vinylester von gesättigten aliphatischen Carbonsäuren mit 1 bis 14 C-Atomen, Olefine, Vinylaromaten, Vinylhalogenide und/oder Vinylether hergestellt wird, dadurch gekennzeichnet, daß
a) zu dem Polymerlatex der ersten Stufe gleichzeitig oder in beliebiger Reihenfolge Wasserstoffperoxid und ein Radikalstarter, der bei der Temperatur, die der Latex zum Zeitpunkt der Wasserstoffperoxid-Zugabe aufweist, mit einer Halbwertszeit > 48 Stunden zu Radikalen zerfällt, zugegeben werden und
b) in der zweiten Stufe dieses Gemisch auf eine Temperatur erhitzt wird, bei der der Radikalstarter mit einer Halbwertszeit < 48 Stunden zu Radikalen zerfällt, und/oder Reduktionsmittel zugegeben wird und
c) das Latexpolymerisat nach Zugabe der Pfropfmonomerphase, welche ein oder mehrere Monomere enthält, die Homopolymerisate mit einer Glasübergangstemperatur T_{g} > 20°C bilden, gegebenenfalls zusammen mit weiterem Reduktionsmittel, gepfropft wird.

Bevorzugte Basismonomere sind aus der Gruppe der Methacrylsäureester oder Acrylsäureester von Alkoholen mit 1 bis 14 C-Atomen Methylmethacrylat, Methylacrylat, Ethylmethacrylat, Ethylacrylat, Isopropylmethacrylat, Isopropylacrylat, tert.-Butylacrylat, n-Butylacrylat und Ethylhexylacrylat. Aus der Gruppe der Vinylester von gesättigten aliphatischen Carbonsäuren mit 1 bis 14 C-Atomen sind bevorzugt: Vinylacetat, Vinyl-2-ethylhexanoat, Isopropenylacetat, Vinylpropionat, Vinyllaurat und Versaticsäure^{R}-Vinylester mit 9 bis 10 C-Atomen (Vinylester von gesättigten α-verzweigten Monocarbonsäuren, Handelsprodukt der Fa. Shell). Bevorzugt sind weiter aus der Gruppe der Olefine Ethylen, Propylen und 1,3-Butadien und aus der Gruppe der Vinylhalogenide Vinylchlorid sowie Styrol als bevorzugter Vinylaromat.

Gegebenenfalls können die erfindungsgemäßen Copolymerisate als Basismonomere noch bis zu 10 Gew%, bezogen auf das Copolymerisat, ethylenisch ungesättigte, funktionelle Comonomere enthalten. Beispiele hierfür sind Mono- oder Dicarbonsäuren wie Methacrylsäure, Acrylsäure oder Fumarsäure und deren Amide, hydroxyfunktionelle Monomere wie Hydroxyethylacrylat, 2-Hydroxypropylacrylat oder N-Methylolacrylamid, sulfonatfunktionelle Monomere wie Vinylsulfonat oder 2-Acrylamido-2-methyl-propansulfonat und mehrfach ungesättigte Monomere wie Divinyl- oder Diallylester von gesättigten oder ungesättigten C₄- oder C₁₀-Dicarbonsäuren, beispielsweise Divinyladipat, oder Triallylcyanurat.

Besonders bevorzugt sind Copolymerisate mit einem oder mehreren Comonomeren aus der Gruppe Vinylacetat, Isopropenylacetat, Vinylpropionat, Vinyl-2-ethylhexanoat, Vinyllaurat, Vinylchlorid und/oder Ethylen oder auch vernetzte Polybutylacrylat-Copolymerisate. Am meisten bevorzugt sind Copolymerisate enthaltend 0 bis 50 Gew% Ethylen, 50 bis 100 Gew% Vinylacetat, welche insbesonders mit 0.01 bis 5.0 Gew% der genannten mehrfach ungesättigten Monomere vernetzt sind, wobei sich die Angaben in Gew% auf 100 Gew% aufaddieren.

Der Latex wird vorzugsweise durch radikalische Polymerisation in Emulsion hergestellt. Die Polymerisation wird durch Radikalbildner in einem Temperaturbereich von 0 bis 90°C initiiert. Bei der bevorzugten Emulsionspolymerisation erfolgt die Initiierung mittels wasserlöslicher Radikalbildner, die vorzugsweise in Mengen von 0.01 bis 3.0 Gew%, bezogen auf das Gesamtgewicht der Monomeren, eingesetzt werden. Beispiele hierfür sind Ammonium- und Kaliumpersulfat, ; Wasserstoffperoxid; Azoverbindungen, wie Azobisisobutyronitril oder Azobiscyanovaleriansäure. Bei der thermischen Initiierung erfolgt die Polymerisation vorzugsweise zwischen 70 und 90°C. Die Radikalbildung kann bei niedrigeren Temperaturen, vorzugsweise von 30 bis 55°C, mit Hilfe von reduzierenden Agenzien wie Alkaliformaldehydsulfoxylaten, Alkalisulfiten, -bisulfiten und -thiosulfaten und Ascorbinsäure beschleunigt werden.

Als Dispergiermittel können alle üblicherweise bei der Emulsionspolymerisation verwendeten anionischen und nichtionischen Emulgatoren eingesetzt werden. Vorzugsweise werden 1 bis 6 Gew%, bezogen auf das Gesamtgewicht der Monomeren, an Emulgator eingesetzt. Geeignet sind beispielsweise anionische Tenside, wie Alkylsulfate mit einer Kettenlänge von 8 bis 18 C-Atomen, Alkyl- und Alkylarylethersulfate mit 8 bis 18 C-Atomen im hydrophoben Rest und bis zu 40 Ethylen- oder Propylenoxideinheiten, Alkyl- oder Alkylarylsulfonate mit 8 bis 18 C-Atomen, Ester und Halbester der Sulfobernsteinsäure mit einwertigen Alkoholen oder Alkylphenolen. Geeignete nichtionische Tenside sind beispielsweise Alkylpolyglykolether oder Alkylarylpolyglykolether mit 8 bis 40 Ethylenoxideinheiten.

Der für die Polymerisation gewünschte pH-Bereich, der im allgemeinen zwischen 2.5 und 10, vorzugsweise 3 und 8, liegt, kann in bekannter Weise durch Säuren, Basen oder übliche Puffersalze, wie Alkaliphosphate oder Alkalicarbonate, eingestellt werden. Zur Molekulargewichtseinstellung können bei der Polymerisation die üblicherweise verwendeten Regler, zum Beispiel Mercaptane, Aldehyde und Chlorkohlenwasserstoffe zugesetzt werden.

Die Polymerisation kann diskontinuierlich oder kontinuierlich, mit oder ohne Verwendung von Saatlatices, unter Vorlage aller oder einzelner Bestandteile des Reaktionsgemisches oder unter teilweiser Vorlage und Nachdosierung der oder einzelner Bestandteile des Reaktionsgemisches oder nach dem Dosierverfahren ohne Vorlage durchgeführt werden. Alle Dosierungen erfolgen vorzugsweise im Maße des Verbrauchs der jeweiligen Komponente.

In einer bevorzugten Verfahrensweise zur Herstellung eines Latex der als bevorzugt genannten Ethylen und Vinylester enthaltenden Copolymerisate wird ein Ethylendruck von 10 bis 90 bar abs. zu Beginn der Polymerisation eingestellt und durch Nachdrücken konstant gehalten. Das Vinylester-Comonomere wird vorzugsweise zu 5 bis 20 Gew% vorgelegt, der Rest im Verlauf der Polymerisation zudosiert. Die ethylenisch ungesättigten, funktionellen Comonomere werden vollständig zudosiert oder partiell vorgelegt und der Rest während der Polymerisation dosiert. Die Zugabe des Emulgators ist beliebig, vorzugsweise wird der Emulgator partiell vorgelegt und der Rest während der Polymerisation zudosiert.

Die Polymerisation des Latex wird so geführt, daß der Restmonomergehalt unter 1 Gew%, bezogen auf das Gesamtgewicht des Latex, beträgt und ein Festgehalt von 20 bis 65 Gew% resultiert.

Zur Verbesserung der Phasenanbindung zwischen Pfropfgrundlage und aufgepfropfter Polymerhülle werden mit dem erfindungsgemäßen Verfahren, durch Behandlung des Latexpolymerisats mit Wasserstoffperoxid, Hydroperoxidgruppen an der Teilchenoberfläche der Latexteilchen erzeugt. Dazu werden zu dem Polymerlatex gleichzeitig oder in beliebiger Reihenfolge Wasserstoffperoxid und ein Radikalstarter, der bei der Temperatur, die der Latex während der Wasserstoffperoxid-Behandlung aufweist, mit einer Halbwertszeit > 48 Stunden zu Radikalen zerfällt, zugegeben.

Vorzugsweise werden 0.1 bis 20 Gew%, insbesonders 0.1 bis 10 Gew%, jeweils bezogen auf das Gewicht des Latexpolymerisats der 1. Stufe, Wasserstoffperoxid, zugegeben. Die Zugabe erfolgt vorzugsweise bei einer Temperatur des Latex von 20 bis 40°C, wobei nach Zugabe des Wasserstoffperoxids das Gemisch, vorzugsweise noch 30 Minuten bis 12 Stunden, im genannten Temperaturbereich stehengelassen oder gerührt werden kann. In einer besonders bevorzugten Ausführungsform werden zusammen mit dem Wasserstoffperoxid noch katalytische Mengen, vorzugsweise 0.001 bis 0.01 Gew%, bezogen auf Latexpolymerisat, an Salzen von Schwermetallen, welche in mehreren Oxidationsstufen auftreten können, beispielsweise Eisensalze wie Eisen(II)sulfat, zugegeben.

Nach der Wasserstoffperoxid-Behandlung wird das Gemisch auf eine Temperatur erhitzt, bei der der Radikalstarter mit einer Halbwertszeit < 48 Stunden zu Radikalen zerfällt. Alternativ dazu kann der Radikalstart auch ohne weiteres Erhitzen durch Zugabe von Reduktionsmittel initiiert werden.

Beispiele für Radikalstarter, die zur Initiierung der Pfropfreaktion geeignet sind, sind wasserlösliche Radikalbildner wie Ammoniumpersulfat, Kaliumpersulfat, oder wasserlösliche Azoverbindungen wie Azobisisobutyronitril bzw. Azobiscyanovaleriansäure. Geeignete Reduktionsmittel sind die in Redoxinitiatorsystemen gebräulichen wie Alkaliformaldehydsulfoxylate (Rongalit, Brüggolit), Alkalisulfite, -bisulfite und -thiosulfate sowie Ascorbinsäure. Vorzugsweise werden das Reduktionsmittel und/oder der wasserlösliche Radikalstarter in Mengen von 0.01 bis 3.0 Gew%, bezogen auf die Pfropfmonomerphase, eingesetzt.

Nach der Wasserstoffperoxid-Behandlung, gegebenenfalls nach Erreichen des Temperaturgleichgewichts, werden die zu pfropfenden Monomere, gegebenenfalls zusammen mit einem Reduktionsmittel, zudosiert. Die Pfropfmonomerphase enthält ein oder mehrere Monomere, welche Homopolymerisate mit einer Glasübergangstemperatur T_{g} > 20°C bilden. Vorzugsweise werden Styrol, Vinyltoluol, Methylmethacrylat, Vinylchlorid oder Gemische dieser Monomeren aufgepfropft. Die Pfropfmonomeren werden dabei in einer solchen Menge zugegeben, daß der Anteil der aufgepfropften Polymerhülle 5 bis 95 Gew% des Pfropfcopolymerisats beträgt.

Die Pfropfung erfolgt in Abhängigkeit vom gewählten Initiatorsystem bei Temperaturen zwischen 30 und 90°C. Gegebenenfalls können zur Pfropfung noch 0.1 bis 5.0 Gew%, bezogen auf das Gesamtgewicht des Pfropfcopolymerisats, der genannten nichtionischen oder anionischen Emulgatoren zugegeben werden. In einer bevorzugten Ausführungsform wird nach Beendigung der Pfropfmonomerzugabe solange Reduktionsmittel nachdosiert, bis der Restmonomergehalt unter 1 Gew%, bezogen auf das Gesamtgewicht des Latex, beträgt. Der Festgehalt der nach dem erfindungsgemäßen Verfahren hergestellten Pfropfcopolymerdispersionen beträgt zwischen 20 und 65 Gew%, wobei zur Einstellung des Festgehalts der Latex vor der Wasserstoffperoxid-Behandlung mit Wasser entsprechend verdünnt werden kann.

Die Aufarbeitung zur Isolierung der Pfropfcopolymerisate kann beispielsweise durch Sprühtrocknung, Walzentrocknung oder durch Koagulation mit anschließender Trocknung erfolgen.

Ein weiterer Gegenstand der Erfindung sind nach dem erfindungsgemäßen Verfahren hergestellte Pfropfcopolymer-Latices und Pfropfcopolymerisate mit einem Kern, enthaltend eines oder mehrere Monomere aus der Gruppe der (Meth)acrylsäureester von Alkoholen mit 1 bis 14 C-Atomen, Vinylester von gesättigten aliphatischen Carbonsäuren mit 1 bis 14 C-Atomen, Olefine, Vinylaromaten, Vinylhalogenide und/oder Vinylether, und einer Schale aus einem oder mehreren Monomeren, welche Homopolymerisate mit einer Glasübergangstemperatur T_{g} > 20°C bilden. Bevorzugt werden Kern-Schale-Dispersionsteilchen, deren Kern aus vernetzten, kautschukelastischen Polymeren mit einer Glasübergangstemperatur von T_{g} < 20°C besteht. Besonders bevorzugt sind Pfropfcopolymerisate mit einem vernetzten Kern enthaltend Vinylacetat und Ethylen oder einem vernetzten Kern enthaltend Butylacrylat, wobei die Schale aus Styrol, Methylmethacrylat und/oder Vinylchlorid aufgebaut ist.

Weiter betrifft die Erfindung die Verwendung der erfindungs-gemäß hergestellten Pfropfcopolymer-Latices als wäßrige Bindemittel im Textilbereich und in Dispersionsfarben sowie als Klebemittel in Putzen. Die nach Aufarbeitung der Dispersion erhältlichen Pfropfcopolymerisate eignen sich zur Verwendung als thermoplastisch verarbeitbare Formmasse zur Erzeugung von flexiblen bis weichen Formkörpern (thermoplastische Elastomere), als Additive zur Modifizierung oder Phasenvermittlung in Polymerlegierungen und als "low-profile"-Additiv in UP-Harzen.

Mit der erfindungsgemäßen Verfahrensweise werden durch die Wasserstoffperoxid-Behandlung Hydroperoxid-Gruppen an der Teilchenoberfläche der Pfropfgrundlage erzeugt. Die Pfropfreaktion erfolgt dann im nachfolgenden Schritt durch thermische oder reduktive Aktivierung der Hydroperoxid-Gruppen. Infolge der dann auf der Teilchenoberfläche gebildeten Radikale wird ein erhöhter Pfropfgrad erzwungen, aus dem sich direkt proportional die verbesserten mechanischen Eigenschaften der daraus hergestellten Formkörper ergeben. Gegenüber den aus dem Stand der Technik bekannten Verfahrensweisen hat das vorliegende Verfahren die Vorteile, daß die Herstellung der Pfropfgrundlage, im Gegensatz zur Copolymerisation von "graft-linking" Monomeren, und der Pfropfschritt, im Gegensatz zur Copolymerisation von Makroinitiatoren, nicht erschwert werden und im Gegensatz zur Behandlung mit Luftsauerstoff keine retardierenden Effekte auftreten.

Die nachfolgenden Beispiele dienen zur weiteren Erläuterung der Erfindung.

### Beispiel 1:

### Herstellung einer vernetzten Ethylen-Vinylacetat-Dispersion als Pfropfgrundlage

Zunächst wurden vier Lösungen vorbereitet:

Initiatorlösung I: 0.25 Gew.teile Kaliumpersulfat wurden in 5.5 Gew.teilen Wasser gelöst.

Initiatorlösung II: 0.45 Gew.teile Kaliumpersulfat wurden in 14.6 Gew.teilen Wasser gelöst.

Monomerlösung: 0.45 Gew.teile Divinyladipat wurden in 90 Gew.teilen Vinylacetat gelöst.

Voremulsion: 0.8 Gew.teile Na-2-Acrylamido-2-methyl-propansulfonat und 2.2 Gew.teile eines Diisohexylsulfosuccinats (Aerosol MA 80 der Fa. Cyanamid) wurden in 42 Gew.teilen Wasser emulgiert.

In einem Rührautoklaven wurden 9.75 Gew.teile Vinylacetat, 0.25 Gew.teile Vinylsulfonat und 0.515 Gew.teile eines Diisohexylsulfosuccinats (Aerosol MA 80 der Fa. Cyanamid) auf 75°C erwärmt und mit 80 bar Ethylen beschickt. Nach Erreichen des Temperaturgleichgewichts wurden die oben beschriebene Initiatorlösung I innerhalb von 10 Minuten zugegeben und die drei weiteren Dosierlösungen dosiert. Die Dosierraten wurden entsprechend einer Dosierzeit von 5 Stunden im Fall der Monomerlösung und der Voremulsion sowie einer Dosierzeit von 6 Stunden im Falle der Initiatorlösung II gewählt.

Es resultierte eine feinteilige Dispersion mit einem Festgehalt von 50.2 Gew% und einer monomodalen Teilchengrößenverteilung, wobei die mittlere Teilchengröße 172 nm betrug. Das Copolymerisat hatte einen Ethylengehalt von 41 Gew%, die Glasübergangstemperatur des Polymerharzes (DSC) lag bei -26.5°C; sein K-Wert (in THF) betrug 42.1.

### Beispiel 2:

### Pfropfpolymerisation nach Vorbehandlung mit 5 Gew% Wasserstoffperoxid

In einem 31-Glaskolben mit Innenthermometer, Rückflußkühler und Rührer wurden 1070 g der EVA-Dispersion aus Beispiel 1, 61.6 g einer 35 %-igen H₂O₂-Lösung und 2.08 g Kaliumpersulfat vorgelegt und 2 Stunden bei Raumtemperatur gerührt. Anschließend wurde das Gemisch auf 65°C erwärmt. Nach Erreichen des Temperaturgleichgewichts wurden 1.65 g Natriumsalz der Hydroxymethansulfinsäure (Brüggolit) gelöst in 108 ml Wasser sowie eine Voremulsion bestehend aus 180 g Styrol, 2.88 g Aerosol MA 80 und 125 ml Wasser über einen Zeitraum von 3 Stunden zudosiert. Die Reaktion wurde durch einstündiges Rühren bei 65°C vervollständigt.

Es resultierte eine feinteilige Dispersion mit einem Festgehalt von 43.3 Gew% und einer monomodalen Teilchengrößenverteilung, wobei die mittlere Teilchengröße 192 nm betrug. Das teilchenförmige Pfropfpolymerisat war zweiphasig, die Glasübergangstemperaturen (DSC) lagen bei -25.1°C und bei +101.8°C; der K-Wert (in THF) betrug 42.1. Der Restmonomeranteil wurde zu 0.88 Gew% bestimmt.

### Beispiel 3

### Pfropfpolymerisation nach Vorbehandlung mit 10 Gew% Wasserstoffperoxid

Es wurde genauso verfahren wie in Beispiel 2 mit dem Unterschied, daß 123 g einer 35 %-igen H₂O₂-Lösung in die Vorlage eingerührt wurden.

Es resultierte eine feinteilige Dispersion mit einem Festgehalt von 44.3 Gew% und einer monomodalen Teilchengrößenverteilung, wobei die mittlere Teilchengröße 181 nm betrug. Das teilchenförmige Pfropfpolymerisat war zweiphasig, die Glasübergangstemperaturen (DSC) lagen bei -26.0°C und bei +102.3°C; der K-Wert (in THF) betrug 38.9. Der Restmonomeranteil wurde zu 0.57 Gew% bestimmt.

### Vergleichsbeispiel 1

### Pfropfpolymerisation ohne Vorbehandlung mit Wasserstoffperoxid

Es wurde genauso verfahren wie in Beispiel 2 und 3 mit dem Unterschied, daß kein Wasserstoffperoxid vor der Pfropfreaktion zugegeben wurde.

Es resultierte eine feinteilige Dispersion mit einem Festgehalt von 43.1 Gew% und einer monomodalen Teilchengrößenverteilung, wobei die mittlere Teilchengröße 180 nm betrug. Das teilchenförmige Pfropfpolymerisat war zweiphasig, die Glasübergangstemperaturen (DSC) lagen bei -25.1°C und bei +100.1°C; der K-Wert (in THF) betrug 36.9. Der Restmonomeranteil wurde zu 0.98 Gew% bestimmt.

### Anwendungstechnische Prüfung:

### Herstellung der Probekörper:

Zur Prüfung bezüglich der Produktqualität und Verarbeitbarkeit wurden die Dispersionen durch Zugabe einer 10 %-igen CaCl₂-Lösung koaguliert und das resultierende Koagulat filtriert, gewaschen und zu einem weißen, rieselfähigen Pulver getrocknet.

Die Verarbeitung erfolgte zunächst auf einem Laborwalzwerk bei 170°C. Die Walzprodukte wurden anschließend bei 170°C und 10 MPa zu 1 mm dicken Platten verpreßt.

### Prüfmethoden:

Mit den Platten wurde die Shore-Härte A nach DIN 53505, die Reißfestigkeit und Reißdehnung nach DIN 53504 sowie der Weiterreißwiderstand nach DIN 53515 bestimmt.

Die Ergebnisse der Prüfungen sind in Tabelle 1 zusammengefaßt.

**Tabelle 1**

| Beispiel | Shore A | Reißfestigkeit [N/mm] | Reißdehnung [%] | Weiterreißwiderstand [N/mm] |
|---|---|---|---|---|
| Vgl.bsp. 1 | 46 | 5.55 | 216 | 6.26 |
| Beispiel 2 | 56 | 6.27 | 239 | 7.76 |
| Beispiel 3 | 57 | 6.50 | 259 | 10.90 |

Wie man Tabelle 1 entnehmen kann, erreicht man mit der Wasserstoffperoxid-Behandlung bei den resultierenden Formkörpern eine Steigerung der Reißfestigkeit um ca. 20 % bei gleichzeitig um ebenfalls etwa 20 % erhöhter Reißdehnung. Der Weiterreißwiderstand verbessert sich sogar um ca. 75 %.

## Patentansprüche

1. Verfahren zur Herstellung eines Pfropfcopolymer-Latex von Kern-Schale-Dispersionsteilchen mit verbesserter Phasenanbindung zwischen Kern und Schale in einem zweistufigen Emulsionspolymerisationsverfahren, wobei in der ersten Stufe ein Latex auf der Basis eines oder mehrerer Monomere aus der Gruppe der (Meth)acrylsäureester von Alkoholen mit 1 bis 14 C-Atomen, Vinylester von gesättigten aliphatischen Carbonsäuren mit 1 bis 14 C-Atomen, Olefine, Vinylaromaten, Vinylhalogenide und/oder Vinylether hergestellt wird, dadurch gekennzeichnet, daß
a) zu dem Polymerlatex der ersten Stufe gleichzeitig oder in beliebiger Reihenfolge Wasserstoffperoxid und ein Radikalstarter, der bei der Temperatur, die der Latex zum Zeitpunkt der Wasserstoffperoxid-Zugabe aufweist, mit einer Halbwertszeit > 48 Stunden zu Radikalen zerfällt, zugegeben werden und
b) in der zweiten Stufe dieses Gemisch auf eine Temperatur erhitzt wird, bei der der Radikalstarter mit einer Halbwertszeit < 48 Stunden zu Radikalen zerfällt, und/oder Reduktionsmittel zugegeben wird und
c) das Latexpolymerisat nach Zugabe der Pfropfmonomerphase, welche ein oder mehrere Monomere enthält, die Homopolymerisate mit einer Glasübergangstemperatur T_{g} > 20°C bilden, gegebenenfalls zusammen mit weiterem Reduktionsmittel, gepfropft wird.

2. Verfahren nach Anspruch 1, dadurch gekennzeichnet, daß 0.1 bis 20 Gew%, bezogen auf das Gewicht des Latexpolymerisats der ersten Stufe, Wasserstoffperoxid zugegeben werden.

3. Verfahren nach Anspruch 1 oder 2, dadurch gekennzeichnet, daß die Wasserstoffperoxid-Zugabe bei einer Temperatur des Latex von 20 bis 40°C erfolgt.

4. Verfahren nach Anspruch 1 bis 3, dadurch gekennzeichnet, daß nach Zugabe des Wasserstoffperoxids das Gemisch noch 30 Minuten bis 12 Stunden im genannten Temperaturbereich stehengelassen oder gerührt wird.

5. Verfahren nach Anspruch 1 bis 4, dadurch gekennzeichnet, daß zusammen mit dem Wasserstoffperoxid noch katalytische Mengen an Salzen von Schwermetallen, welche in mehreren Oxidationsstufen auftreten können, zugegeben werden.

6. Verfahren nach Anspruch 1 bis 5, dadurch gekennzeichnet, daß zusammen mit dem Wasserstoffperoxid noch 0.001 bis 0.01 Gew%, bezogen auf Latexpolymerisat, an Eisensalzen, wie Eisen(II)sulfat, zugegeben werden.

7. Pfropfcopolymerlatices hergestellt nach einem Verfahren gemäß Anspruch 1 bis 6, dadurch gekennzeichnet, daß deren Kern aus vernetzten, kautschukelastischen Polymeren, welche Vinylacetat und Ethylen oder Butylacrylat enthalten, besteht und die Schale aus Styrol, Methylmethacrylat und/oder Vinylchlorid aufgebaut ist.

8. Verwendung der Pfropfcopolymerlatices nach Anspruch 7 als wäßrige Bindemittel im Textilbereich und in Dispersionsfarben sowie als Klebemittel in Putzen.

9. Verwendung der nach Aufarbeitung der Pfropfcopolymerlatices gemäß Anspruch 7 erhältlichen Pfropfcopolymerisate als thermoplastisch verarbeitbare Formmasse zur Erzeugung von flexiblen bis weichen Formkörpern (thermoplastische Elastomere), als Additive zur Modifizierung oder Phasenvermittlung in Polymerlegierungen und als "low-profile"-Additiv in UP-Harzen.

## Claims

1. Process for the preparation of a graft copolymer latex of core/shell dispersion particles having improved phase binding between core and shell in a two-stage emulsion polymerization process, a latex based on one or more monomers from the group comprising (meth)acrylates of alcohols having 1 to 14 C atoms, vinyl esters of saturated aliphatic carboxylic acids having 1 to 14 C atoms, olefins, vinyl aromatics, vinyl halides and/or vinyl ethers being prepared in the first stage, characterized in that
a) hydrogen peroxide and a free radical initiator which decomposes into free radicals with a half-life of > 48 hours at the temperature of the latex at the time of addition of the hydrogen peroxide are added to the polymer latex of the first stage simultaneously or in any order and
b) in the second stage, this mixture is heated ot a temperature at which the free radical initiator decomposes into free radicals with a half-life of < 48 hours and/or a reducing agent is added and
c) after the addition of the graft monomer phase which contains one or more monomers which from homopolymers having a glass transition temperature T_{g} of > 20°C, the latex polymer is grafted, if necessary together with further reducing agent.

2. Process according to Claim 1, characterized in that 0.1 to 20% by weight, based on the weight of the latex polymer of the first stage, of hydrogen peroxide are added.

3. Process according to Claim 1 or 2, characterized in that the addition of hydrogen peroxide is effected at a latex temperature of 20 to 40°C.

4. Process according to any of Claims 1 to 3, characterized in that, after the addition of the hydrogen peroxide, the mixture is allowed to stand or is stirred for a further 30 minutes to 12 hours in the stated temperature range.

5. Process according to any of Claims 1 to 4, characterized in that catalytic amounts of salts of heavy metals which may occur in a plurality of oxidation states are also added together with hydrogen peroxide.

6. Process according to any of Claims 1 to 5, characterized in that 0.001 to 0.01% by weight, based on the latex polymer, of iron salts, such as iron(II) sulphate, is also added together with the hydrogen peroxide.

7. Graft copolymer latices prepared by a process according to any of Claims 1 to 6, characterized in that the core thereof consists of crosslinked, elastomeric polymers which contain vinyl acetate and ethylene or butyl acrylate and the shell is composed of styrene, methyl methacrylate and/or vinyl chloride.

8. The use of the graft copolymer lactices according to Claim 7 as aqueous binders in the textile sector and in emulsion paints and as adhesives in plasters.

9. The use of the graft copolymers, obtainable after working up the graft copolymer lactices according to Claim 7, as a thermoplastic moulding material for producing flexible to soft mouldings (thermoplastic elastomers), as additives for modification or imparting phase compatibility in polymer alloys and as "low-profile" additives in UP resins.

## Revendications

1. Procédé de préparation d'un latex de copolymère greffé constitué de particules de dispersion coeur-enveloppe, avec adhésion de phase améliorée entre le coeur et l'enveloppe, dans un procédé de polymérisation en émulsion à deux étapes, un latex étant préparé dans la première étape à base d'un ou de plusieurs monomères du groupe des esters d'acide (méth)acrylique d'alcools ayant de 1 à 14 atomes de C, des esters vinyliques d'acides carboxyliques aliphatiques saturés ayant de 1 à 14 atomes de C, des oléfines, des composés aromatiques vinyliques, des halogénures vinyliques et/ou des éthers vinyliques, caractérisé en ce que
a) l'on ajoute au latex de polymère de la première étape, simultanément ou dans une séquence quelconque, du peroxyde d'hydrogène et un agent initiateur radicalaire, qui, à la température que le latex présente au moment de l'addition de peroxyde d'hydrogène, se décompose en radicaux avec une période de demi-vie > 48 heures, et en ce que
b) l'on chauffe ce mélange dans la deuxième étape à une température à laquelle l'agent initiateur radicalaire se décompose en radicaux avec une période de demi-vie < 48 heures, et/ou en ce que l'on ajoute des agents réducteurs et en ce que
c) l'on procède au greffage du polymérisat de latex après addition de la phase monomère de greffage, qui contient un ou plusieurs monomères, qui forment des homopolymérisats avec une température de transition vitreuse T_{g} > 20 degrés C, le cas échéant, conjointement avec un autre agent de réduction.

2. Procédé selon la revendication 1, caractérisé en ce que l'on ajoute de 0,1 à 20 % en poids, par rapport au poids du polymérisat de latex de la première étape, de peroxyde d'hydrogène.

3. Procédé selon la revendication 1 ou 2, caractérisé en ce que l'addition du peroxyde d'hydrogène se fait à une température du latex de 20 à 40 degrés C.

4. Procédé selon la revendication 1 à 3, caractérisé en ce qu'après l'addition du peroxyde d'hydrogène, on laisse reposer ou on agite le mélange encore pendant 30 minutes à 12 heures dans le domaine de température cité.

5. Procédé selon la revendication 1 à 4, caractérisé en ce que l'on ajoute encore, conjointement au peroxyde d'hydrogène, des quantités catalytiques de sels de métaux lourds, qui peuvent apparaître dans divers états d'oxydation.

6. Procédé selon la revendication 1 à 5, caractérisé en ce que l'on ajoute encore, conjointement au peroxyde d'hydrogène, de 0,001 à 0,01 % en poids, par rapport au polymérisat de latex, de sels de fer, comme le sulfate de fer (II).

7. Latex de copolymère greffés préparés selon un procédé conformément à la revendication 1 à 6, caractérisés en ce que leur coeur se compose de polymères réticulés à élasticité caoutchouc, qui contiennent de l'acétate de vinyle et de l'éthylène ou de l'acrylate de butyle, et en ce que l'enveloppe est constituée de styrène, de méthacrylate de méthyle et/ou de chlorure de vinyle.

8. Utilisation des latex de copolymère greffés selon la revendication 7, en tant que liant aqueux dans le domaine des textiles et dans les peintures au latex ainsi qu'en tant qu'adhésif dans les enduits.

9. Utilisation des copolymérisats greffés, que l'on peut obtenir après traitement d'achèvement des latex de copolymère greffés conformément à la revendication 7, en tant que masses de moulage qui peuvent être traitées de manière thermoplastique en vue de la production de corps de forme, allant de souples à mous (élastomères thermoplastiques), en tant qu'additifs pour la modification ou la transition de phase dans des alliages de polymères, et en tant qu'additif "low-profile" dans les résines non plastifiées.
